# EUROPÄISCHE PATENTSCHRIFT

(11) **EP 0 642 890 B1**
(45) Veröffentlichungstag und Bekanntmachung des Hinweises auf die Patenterteilung: **23.04.1997**
(21) Anmeldenummer: 94112302.8
(22) Anmeldetag: 05.08.1994
(51) Int. Cl.: B25B 23/14, B23P 19/06, B21J 15/28, G05B 13/02

(54) **Verfahren zum Herstellen einer Fügeverbindung, insbesondere einer Schraubverbindung**
Method of producing a connection, especially a threaded connection
Procédé pour établir un raccord, notamment un raccord à vis

(30) Priorität: 09.09.1993 DE 4330481
(43) Veröffentlichungstag der Anmeldung: 15.03.1995
(73) Patentinhaber: ROBERT BOSCH GMBH, 70442 Stuttgart (DE)
(72) Erfinder: Layer, August, Dr. Dr.-Ing., D-74613 Öhringen (DE); Haerle, Vinzenz, Dipl.-Ing., D-72654 Neckartenzlingen (DE); Backe, Wolfgang, Prof.Dr., D-52072 Aachen (DE); Schneider, Egbert, Dipl.-Ing., D-52062 Aachen (DE)

(56) Entgegenhaltungen:
- EP-A- 0 171 058
- EP-A- 0 285 815
- DE-A- 3 837 942
- DE-C- 4 241 941
- Ö+P ÖLHYDRAULIK UND PNEUMATIK, Bd.35, Nr.5, Mai 1991, MAINZ Seiten 429 - 436 E.SCHNEIDER 'ANSPRUCHSVOLLE SCHRAUBTECHNIKEN MIT DEM PNEUMATIKSCHRAUBER'

## Beschreibung

Die Erfindung betrifft ein Verfahren nach dem Oberbegriff des Anspruchs 1, vgl. z.B. EP-A-0 285 815.

### Stand der Technik

Es ist bekannt, wenigstens zwei Teile mittels einer Schraubverbindung lösbar miteinander zu verbinden. Sollen hochwertige Schraubverbindungen hergestellt werden, so ist es erforderlich, den Schraubvorgang geregelt durchzuführen, das heißt nach Beendigung des Schraubvorganges ist ein bestimmter gewollter Zustand erreicht. Dies kann beispielsweise die Einstellung solcher Parameter wie Drehmoment, Drehwinkel, Gradient der Änderung des Drehmomentes nach dem Drehwinkel, Vorspannkraft, Tiefe usw. sein. Um hier Ergebnisse mit optimaler Genauigkeit zu erreichen, werden geregelte Verfahren eingesetzt, wobei die jeweiligen optimalen Reglerparameter durch Versuche bestimmt und voreingestellt werden müssen. Da die Reglerparameter abhängig von dem jeweiligen Schraubfall unterschiedlich eingestellt werden müssen, sind bei häufig wechselnden Schraubfällen umfangreiche Vorversuche, einschließlich Meßreihen, durchzuführen. Weiterhin ist nachteilig, daß hierbei während eines konkreten Schraubfalls auftretende Störgrößen, die trotz des gleichen Schraubfalls bei jeder Schraubverbindung unterschiedlich sein können, nicht berücksichtigbar sind.

### Vorteil der Erfindung

Das erfindungsgemäße Verfahren gemäß dem Kennzeichen des Anspruchs 1 hat demgegenüber den Vorteil, daß während jedes Schraubvorgangs eine Anpassung der Reglerparameter automatisch erfolgt und hierbei insbesondere plötzlich auftretende, bei jedem Schraubvorgang unterschiedlich große Störgrößen im System mitberücksichtigt werden können. Eine Fehleinstellung durch einen Benutzer einer den Fügevorgang durchführenden Fügeeinrichtung ist ausgeschlossen. Somit wird jede mit der Fügeeinrichtung hergestellte Verbindung die gleichen voreingestellten Sollwerte erreichen. Vorzugsweise lassen sich hiermit insbesondere eine Vielzahl von Schraubverbindung herstellen, die alle ein gleiches Anzugsdrehmoment aufweisen. Dadurch daß während des Fügens wenigstens zwei aktuelle den Fügefortschritt repräsentierende Meßwerte nach Art der Fuzzy-Logik ausgewertet werden, können vielfältige, eine Störgröße hervorrufende Randbedingungen berücksichtigt werden, ohne daß der Aufwand zur Realisierung des Verfahrens wesentlich erhöht wird.

In bevorzugter Ausgestaltung des Verfahrens ist vorgesehen, daß die Meßwerte während des gesamten Fügevorgangs bis zum Erreichen eines Sollwertes wenigstens eines Meßwertes ermittelt werden. Hierdurch ist sehr vorteilhaft möglich, daß die eine Stellgröße für die Fügeeinrichtung ergebenden Reglerparameter tatsächlich bis zum Erreichen des Sollwertes ausgewertet werden, so daß selbst kurz vor Abschluß des Fügevorganges auftretende Störgrößen berücksichtigt werden können. Insgesamt ist damit ein sehr genaues Ergebnis möglich, da die Anpassung der Reglerparameter fortlaufend erfolgt.

In weiterer bevorzugter Ausgestaltung des Verfahrens ist vorgesehen, daß die Meßwerte bis zum Erreichen eines vorläufigen Fügezustandes ermittelt werden und zu diesem Zeitpunkt eine Stellgröße für die Fügeeinrichtung ermittelt wird, die ein Erreichen des Sollwertes ermöglicht. Hierdurch ergibt sich der Vorteil, daß zu einem vorher genau bestimmbaren Zeitpunkt die aktuellen Meßwerte vorzugsweise zyklisch erfaßt werden können und damit eine sehr genaue Ermittlung der notwendigen Stellgröße möglich ist, die ein Erreichen des angestrebten Sollwertes gewahrleistet.

Weitere vorteilhafte Ausgestaltungen des Verfahrens ergeben sich aus den übrigen in den Unteransprüchen genannten Merkmalen.

### Zeichnung

Die Erfindung wird nachfolgend in Ausführungsbeispielen anhand der zugehörigen Zeichnungen näher erläutert. Es zeigen:
- Figur 1: ein Blockschaltbild eines regelbaren servopneumatischen Schraubers;
- Figur 2: eine Prinzipdarstellung einer Regelung des Schraubers;
- Figur 3: ein Diagramm zur Verdeutlichung der Durchführung des Verfahrens in einer ersten Variante;
- Figur 4: ein Diagramm zur Verdeutlichung der Durchführung des Verfahrens in einer zweiten Variante;
- Figur 5: Mitgliedschaftsfunktionen von Eingangsgrößen und
- Figur 6: Mitgliedschaftsfunktionen von Ausgangsgrößen.

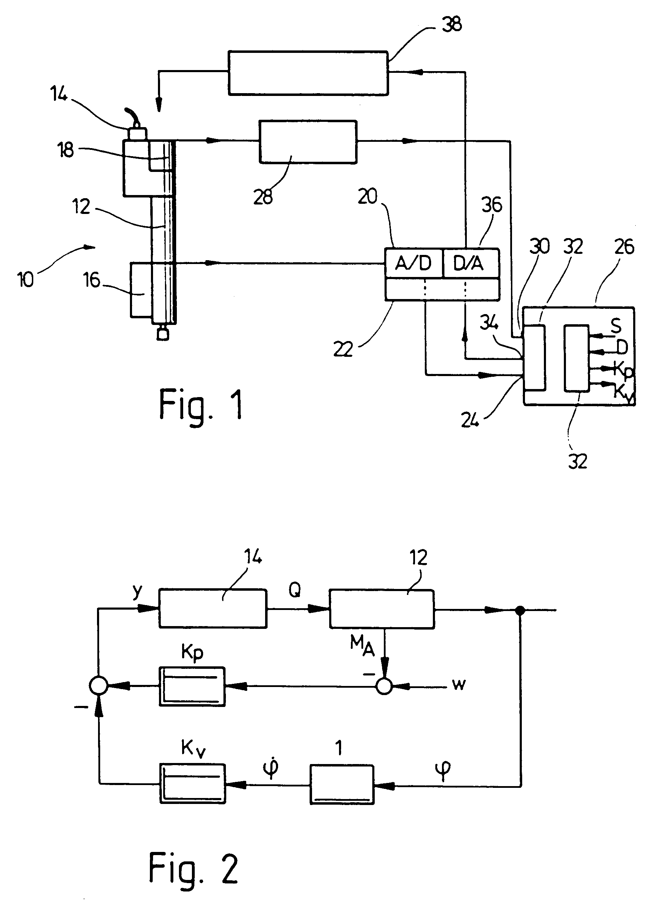

Figur 1 zeigt schematisch einen servopneumatischen Schrauber 10, der als Antrieb einen Druckluftmotor 12 aufweist. Die Leistung des Druckluftmotors 12 ist über ein Servoventil 14 regelbar. Der Schrauber 10 weist weiterhin einen Drehmomentsensor 16 zur Erfassung des Drehmomentes und einen Drehwinkelsensor 18 zur Erfassung des Drehwinkels auf. Das Servoventil 14 ist an eine geeignete Druckluftquelle angeschlossen. Der Drehmomentsensor 16 ist an einen Analogdigitalwandlerbereich 20 eines Wandlers 22 angeschlossen. Der Bereich 20 ist mit einem ersten Anschluß 24 eines Mikroprozessors 26 verbunden. Die über den Drehmomentsensor 16 erfaßten analogen Meßwerte werden in dem Bereich 20 digitalisiert und so dem Mikroprozessor 26 zur Auswertung zugeführt.

Der Drehwinkelsensor 18 ist beispielsweise als Inkrementalgeber ausgebildet und mit einem Zähler 28 verbunden. Der Zähler 28 stellt einen der Winkelstellung entsprechenden Zählerwert zur Verfügung und leitet ein entsprechendes Signal an einen zweiten Eingang 30 des Mikroprozessors 26 weiter. Der Mikroprozessor 26 besitzt eine Meßwertaufbereitungsstufe 32, in welcher aus den von den Sensoren 16 und 18 gelieferten Meßwerten einerseits die Änderung des Drehmomentes über die Änderung des Drehwinkels und andererseits die Änderung des Drehwinkels über die Zeit berechnet werden. Die so ermittelten Werte für eine Steifigkeit S und eine Drehzahl D werden einer Fuzzy-Logik 32 zugeführt. Die Fuzzy-Logik 32 stellt als Ausgangssignale Reglerparameter Kₚ und Kᵥ bereit, die über einen Ausgang 34 des Mikroprozessors 26 einem Digitalanalogwandlerbereich 36 des Wandlers 22 zugeführt werden. Der Bereich 36 ist mit einer Ventilansteuerung 38 verbunden, die eine Stellgröße für das Servoventil 14 bereitstellt. Die Fuzzy-Logik 32 übernimmt somit die Zurverfügungstellung von, von den aktuellen Meßwerten der Sensoren 16 und 18 abhängigen Eingangsgrößen, die Ventilansteuerung 38 regelnden Reglerparameter. Die Ventilansteuerung 38 wiederum steuert über das Servoventil 14 den Druckluftmotor 12 in seiner Leistung und Drehzahl.

In der Figur 2 ist anhand eines Blockschaltbildes eine mit dem Schrauber 10 durchgeführte Drehmomentregelung verdeutlicht. Über den Sensor 16 wird ein Istwert MA als Regelgröße geliefert und mit einem zu erreichenden Sollwert W verglichen. Hierbei wird ein entsprechend der Differenz proportionaler Reglerfaktor Kₚ ermittelt. Der über den Sensor 18 ermittelte Drehwinkel Phi wird differenziert und der hieraus ermittelte Wert Phi' bestimmt den Reglerparameter Kᵥ. Die Reglerparameter Kₚ und Kᵥ werden miteinander verglichen und ergeben im Ergebnis eine Stellgröße y für das Servoventil 14. Dieses wiederum regelt einen Luftstrom Q, mit dem der Druckluftmotor 12 angetrieben wird. Der hier dargestellte allgemeine Regelkreis soll zur Verständlichung der nachfolgend beschriebenen Fuzzy-Regelung mittels der in Figur 1 erwähnten Fuzzy-Logik 32 dienen.

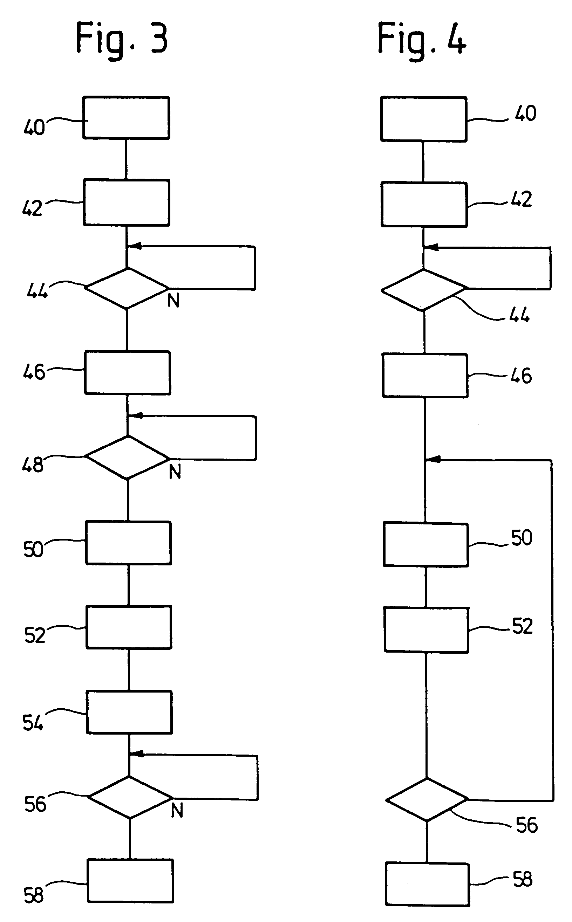

Anhand des in Figur 3 wiedergegebenen Funktionsdiagramms wird das Verfahren zum Einschrauben näher erläutert. Bei Inbetriebnahme des Schraubers 10 wird der Druckluftmotor 12 in einem ersten Schritt 40 gestartet. In einem zweiten Schritt 42 wird beispielsweise eine in Figur 1 nicht dargestellte Schraube eingeschraubt. Es erfolgt nunmehr eine Abfrage 44, ob das Fügemoment erreicht ist. Das Fügemoment ist in dem Moment erreicht, wo ein Schraubenkopf der Schraube auf einem zu verbindenden Teil aufliegt. Ist dies nicht der Fall, geht das System in den Schritt 42 zurück, indem die Schraube weiter eingeschraubt wird. Ist hingegen das Fügemoment erreicht, werden in einem nächsten Schritt 46 über die bereits erwähnten Sensoren 16 und 18 das Drehmoment und der Drehwinkel abgelesen. In einer weiteren Abfrage 48 wird ermittelt, ob eine bestimmte Anzahl von vorgebbaren Meßzyklen erreicht wurde. Ist dies nicht der Fall, fällt das System in den Verfahrensschritt 46 zurück, so daß das Drehmoment und der Drehwinkel wiederholt abgelesen werden. Ist die gewünschte Anzahl von Meßzyklen erreicht, wird in einem nächsten Schritt 50 die Steifigkeit S und die Drehzahl D berechnet. Die Steifigkeit ergibt sich dabei aus der Änderung des Drehmomentes über die Änderung des Drehwinkels und die Drehzahl aus der Änderung des Drehwinkels über die Änderung der Zeit. In einem weiteren Schritt 52 werden die ermittelten Eingangsgrößen von der Fuzzy-Logik 32 aufgearbeitet bzw. ausgewertet und die für die Ansteuerung der Ventilansteuerung 38 notwendigen Reglerparameter Kₚ bzw. Kᵥ bereitgestellt. Durch die Ventilansteuerung 38 wird in einem nächsten Schritt 54 das Servoventil 14 derart angesteuert, daß eine Leistungsregelung des Druckluftmotors 12 erfolgt. In einer weiteren Abfrage 56 wird das erreichte Anzugsmoment der Schraube mit dem gewünschten Sollwert verglichen. Ist der Sollwert nicht erreicht, wird durch den Schritt 54 der geregelte Anziehvorgang fortgesetzt. Ist hingegen der Sollwert erreicht, wird in einem letzten Schritt 58 der Einschraubvorgang beendet.

Durch den in Figur 3 beschriebenen Verfahrensablauf wird eine Fuzzy-Adaption für einen geregelten servopneumatischen Schrauber erreicht. Zu einem bestimmten vorgebbaren Zeitpunkt, hier mit einer positiven Abfrage 44 beschrieben, werden das aktuelle Drehmoment und der aktuelle Drehwinkel gemessen und daraus Eingangsgrößen für die Fuzzy-Logik 32 ermittelt. Die Fuzzy-Logik 32 wiederum verarbeitet die Eingangsgrößen mit einer Wissensbasis und stellt hieraus die für die Regelung notwendigen Reglerparameter Kₚ bzw. Kᵥ bereit. Diese Reglerparameter stellen die Stellgröße, mit der das Servoventil 14 und damit der Druckluftmotor 12 geregelt wird, bereit. Somit erfolgt eine automatische Einstellung der Reglerparameter in Abhängigkeit des erreichten Fügemomentes, so daß bei verschiedenen Schraubfällen eine unterschiedlich auftretende Schraubfallhärte, für den in dem Schritt 54 endgültig erfolgenden geregelten Anziehvorgang eine genaue Leistungsregelung des Druckluftmotors 12 möglich ist. Da diese Einstellung während des laufenden Schraubvorgangs automatisch erfolgt, ist eine Fehleinstellung durch einen Benutzer des Schraubers 10 ausgeschlossen.

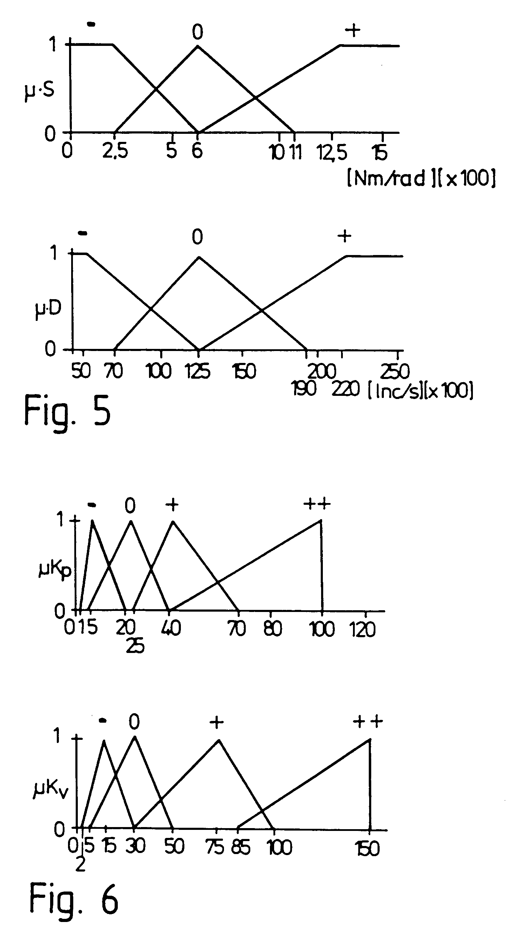

In der Figur 4 wird eine weitere Möglichkeit des Einsatzes der Fuzzy-Logik 32 bei einem Schraubvorgang verdeutlicht. Gleiche Verfahrensschritte wie in Figur 3 sind mit gleichen Bezugszeichen versehen und nicht nochmals erläutert. Bei der hier gezeigten Variante wird die Abfrage 48 übersprungen, so daß die Berechnung der Steifigkeit und der Drehzahl unabhängig von dem Erreichen einer bestimmten Anzahl von Meßzyklen durchgeführt wird. Die Aufarbeitung der Einganggrößen erfolgt in dem Schritt 52 von der Fuzzy-Logik 32 solange, bis die Abfrage 56 das Erreichen des Sollmomentes positiv beantwortet. Bei Nichterreichen des Sollmomentes geht das hier gezeigte Verfahren auf den Schritt 46 zurück, so daß die aktuellen Meßwerte für das Drehmoment und den Drehwinkel weiter abgelesen und entsprechend aufgearbeitet und bewertet werden. Durch das hier beschriebene durchgängige Regeln eines Schraubvorgangs mit Hilfe der Fuzzy-Logik wird erreicht, daß eventuell zwischen dem Eintreten des Fügemomentes und dem Sollmoment auftretende Störgrößen berücksichtigt werden können. Eine Regelung des Schraubvorgangs erfolgt also tatsächlich bis zum Erreichen des gewünschten Sollmomentes. Weiterhin wird durch Überspringen der Abfrage 48 die Anwendung der Fuzzy-Logik bei sehr schnell arbeitenden Schraubern 10, bei denen beispielsweise zwischen dem Eintreten des Fügemomentes und dem Eintreten des Sollmomentes weniger als eine Mikrosekunde vergeht, das zeitbeanspruchende Durchlaufen der Abfrageschleife 48 vermieden. Als weiterer wesentlicher Vorteil des in Figur 4 beschriebenen Verfahrens ergibt sich, daß eine Berücksichtigung von systembehafteten Störgrößen möglich ist, da die automatische Regelung bis zum tatsächlichen Erreichen des Solmomentes durchgeführt wird.

Die bisher in den Figuren 1 bis 4 beschriebene Regelung basiert im wesentlichen auf der Auswertung von Eingangsgrößen, im Beispiel sind das die aus dem gemessenen Drehmoment und dem gemessenen Drehwinkel berechnete Steifigkeit und Drehzahl, durch die Fuzzy-Logik 32.

In der Figur 5 sind die sogenannten Mitgliedschaftsfunktionen dieser Eingangsgrößen dargestellt. In dem oberen Diagramm ist mit µS die Steifigkeit wiedergegeben. Die Zugehörigkeit ist für verschiedene Klassen aufgezeichnet, nämlich für die Klasse "kleine Steifigkeit" (mit - gekennzeichnet), "normale Steifigkeit" (mit 0 gekennzeichnet) und "große Steifigkeit" (mit + gekennzeichnet) eingetragen. Die Zugehörigkeit ist kontinuierlich zwischen dem Wert 0 und dem Wert 1 aufgetragen, wobei dem Wert 0 die Aussage "keine Zugehörigkeit" und dem Wert 1 die "100%ige Zugehörigkeit" zugeordnet sind.

Die Klassen sind hier so eingeteilt, daß die erste Klasse "kleine Steifigkeit" die Zugehörigkeit 1 für alle Werte unter 250 Nm/rad annimmt. Die Zugehörigkeit dieser Klasse fällt dann von dem Wert 1 bei 250 Nm/rad auf den Wert 0 bei 600 Nm/rad. Die zweite Klasse "Steifigkeit normal" weist einen ansteigenden Zugehörigkeitsgrad von dem Wert 0 für 250 Nm/rad bis zu dem Wert 1 bei 600 nm/rad auf.

Die Zugehörigkeit fällt dann von dem Wert 600 Nm/rad auf den Wert 0 bei 1100 Nm/rad ab.

Die dritte Klasse der Steifigkeit weist eine ansteigende Zugehörigkeit von 600 Nm/rad bis 1250 Nm/rad auf. Die Zugehörigkeit behält den Wert 1 für alle Steifigkeiten oberhalb 1250 Nm/rad bei.

In dem zweiten Diagramm der Figur 5 ist die Mitgliedschaftsfunktion für die zweite Eingangsgröße, die Drehzahl, gezeigt. Diese ist hier als µD dargestellt. Die Zugehörigkeit ist wieder für verschiedene Klassen aufgezeichnet, nämlich für die Klasse "kleine Drehzahl" (mit - gekennzeichnet), für die Klasse "normale Drehzahl" (mit 0 gekennzeichnet) und für die Klasse "hohe Drehzahl" (mit + gekennzeichnet) eingetragen. Die Zugehörigkeit ist auch hier durch den Kurvenverlauf zwischen dem Wert 1 und 0 angegeben. Die Klassen sind hier so eingeteilt, daß die erste Klasse "kleine Drehzahl" die Zugehörigkeit 1 für alle Werte unter 5000 Inc/s annimmt. Die Zugehörigkeit dieser Klasse fällt dann von dem Wert 1 bei 5000 Inc/s auf den Wert 0 bei 12500 Inc/s.

Die zweite Klasse "normale Drehzahl" weist einen ansteigenden Zugehörigkeitsgrad von dem Wert 0 für 7000 Inc/s bis zum Wert 1 bei 12500 Inc/s auf. Die Zugehörigkeit fällt von diesem Wert wieder auf den Wert 0 bei 19000 Inc/s ab.

Die dritte Klasse "Drehzahl hoch" weist eine ansteigende Zugehörigkeit von 12500 Inc/s bis 22000 Inc/s auf. Die Zugehörigkeit behält den Wert 1 für alle Drehzahlen oberhalb 22000 Inc/s bei.

Die hier genannten Zahlenwerte für die Übergangsbereiche zwischen den einzelnen Klassen bei den Eingangsgrößen sind lediglich beispielhaft und deren Festlegung kann an den jeweiligen Schraubfall angepaßt werden.

In Figur 6 sind nunmehr die Mitgliedschaftsfunktionen der Ausgangsgrößen der Fuzzy-Logik 32 dargestellt. In dem oberen Diagramm ist hierbei die Ausgangsgröße des Reglerparameter Kₚ gezeigt, der in Abhängigkeit der Meßwerte, also des aktuellen Drehmomentes und des aktuellen Drehwinkels und damit in Abhängigkeit der Eingangsgrößen, also der Steifigkeit und der Drehzahl, den Reglerparameter Kₚ an die Ventilansteuerung 38 liefert.

Der Reglerparameter wird in vier Klassen unterschieden, die jeweils einzelnen Absolutwerten zugeordnet werden. Die Zugehörigkeit des Reglerparameters Kₚ zu den einzelnen Klassen erfolgt dabei durch die Verarbeitung des in Figur 5 dargestellten Fuzzy-Set der Eingangsgrößen mit einer der Fuzzy-Logik 32 bekannten, abgespeicherten Wissensbasis. Es werden hierbei die Klassen "klein", "normal", "groß" und "sehr groß" unterschieden. Die Zugehörigkeit zur Klasse "klein" (mit - gekennzeichnet) steigt von dem Wert 0 auf den Wert 1 zwischen 1 und 5, um dann zwischen 5 und 20 wiederum auf den Wert 0 abzunehmen. Die Zugehörigkeit zur Klasse "normal" (mit 0 gekennzeichnet) steigt von dem Wert 0 bei 5 auf den Wert 1 bei 25 und fällt von diesem wiederum auf den Wert 0 bei 40 ab. Die Zugehörigkeit zur Klasse "groß" (mit + gekennzeichnet) steigt zwischen 25 und 40 von dem Wert 0 auf den Wert 1 und fällt von 40 bis 70 wiederum auf den Wert 0 ab. Der Zugehörigkeitsgrad der Klasse "sehr hoch" (mit ++ gekennzeichnet) steigt von 40 bei dem Wert 0 auf 100 bei dem Wert 1 an und fällt dort wieder auf den Wert 0 ab. In dem zweiten Diagramm der Figur 6 ist die Zugehörigkeitsfunktion der zweiten Ausgangsgröße, also des Reglerparameters Kᵥ gezeigt. Die Zugehörigkeit wird wiederum in vier Klassen eingeteilt, die jeweils einen bestimmten Absolutwert des Reglerparameters Kᵥ ergeben. Die Zugehörigkeit zur Klasse "klein" (mit - gekennzeichnet) steigt hier von dem Wert 0 bei 2 auf den Wert 1 bei 15 an und fällt auf den Wert 0 bei 30 zurück. Die Klasse "normal" (mit 0 gekennzeichnet) steigt bei dem Wert 0 von 5 auf den Wert 1 bei 30 an und fällt bei 50 auf den Wert 0 zurück. Die Zugehörigkeit zur Klasse "hoch" (mit + gekennzeichnet) steigt bei dem Wert 0 von 30 auf 75 bei dem Wert 1 an und fällt von diesem bei 100 auf den Wert 0 ab. Der Zugehörigkeitsgrad zur Klasse "sehr hoch" (mit ++ gekennzeichnet) steigt von dem Wert 0 auf den Wert 1 zwischen 85 und 150, um dort auf den Wert 0 abzunehmen.

Die mit Hilfe in den Figuren 5 und 6 dargestellten Mitgliedschaftsfunktionen ergeben letztendlich durch die meßwertabhängige Einstellung der Reglerparameter Kₚ und Kᵥ über die Fuzzy-Logik die Stellgröße y, mit der das Servoventil 14 und damit die Leistung des Druckluftmotors 12 geregelt wird.

Aus der nachfolgenden Tabelle sind dabei die Regelsätze ablesbar, aus denen sich die Reglerparameter Kₚ bzw. Kᵥ für die verschiedenen tatsächlichen Meßwerte an dem Schrauber 10 ablesen lassen.

**Tabelle**

| Drehzahl (D) | Steifigkeit (S) | Reglerparameter Kₚ | Reglerparameter Kᵥ |
|---|---|---|---|
| + | - | ++ | ++ |
| - | - | + | - |
| 0 | 0 | 0 | 0 |
| - | 0 | - | 0 |
| + | + | - | - |
| 0 | + | 0 | + |

Geht man beispielsweise in der Tabelle auf die erste Zeile des Regelsatzes ein, so ergibt sich daraus, daß der Reglerparameter Kₚ und der Reglerparameter Kᵥ jeweils sehr hoch ist, wenn die Drehzahl D hoch und die Steifigkeit S niedrig ist.

Die weiteren möglichen Fälle sind den übrigen Zeilen des Regelsatzes zu entnehmen.

In dem dargestellten Beispiel werden als zu bewertende Meßwerte das Drehmoment und der Drehwinkel beschrieben. Es ist selbstverständlich möglich, auch andere einen aktuellen Fügefortschritt repräsentierende Meßwerte zu ermitteln und diese über eine entsprechende Bewertung der Fuzzy-Logik zuzuführen. Dies können beispielsweise insbesondere eine Vorspannkraft oder eine Tiefe sein. Auch ist die Verknüpfung von mehr als zwei Meßwerten mit der Fuzzy-Logik möglich, so daß eine noch genauere Einstellung des Sollwertes möglich wird, da über die Ermittlung von mehreren Mitgliedschaftsfunktionen von Eingangsgrößen eine genauere Zuordnung von Mitgliedschaftsfunktionen bei den Ausgangsgrößen möglich ist.

Weiterhin ist eine analoge Anordnung des Verfahrens bei anderen Fügeverfahren, beispielsweise bei einem Einpressen, möglich.

## Patentansprüche

1. Verfahren zum Herstellen einer Fügeverbindung, insbesondere einer Schraubverbindung mittels einer regelbaren Fügeeinrichtung, wobei während des Fügens wenigstens zwei aktuelle den Fügefortschritt repräsentierende Meßwerte ermittelt werden, **dadurch gekennzeichnet**, daß die Meßwerte nach Art der Fuzzy-Logik ausgewertet werden und hieraus eine Stellgröße für die Fügeeinrichtung ermittelt wird.

2. Verfahren nach Anspruch 1, **dadurch gekennzeichnet**, daß die Meßwerte während des gesamten Fügevorgangs bis zum Erreichen eines Sollwertes wenigstens eines der Meßwerte ermittelt werden.

3. Verfahren nach einem der vorhergehenden Ansprüche, **dadurch gekennzeichnet**, daß die Meßwerte bis zum Erreichen eines vorläufigen Fügezustandes ermittelt werden und zu diesem Zeitpunkt eine Stellgröße für die Fügeeinrichtung ermittelt wird.

4. Verfahren nach einem der vorhergehenden Ansprüche, **dadurch gekennzeichnet**, daß die Meßwerte zyklisch erfaßt werden.

5. Verfahren nach einem der vorhergehenden Ansprüche, **dadurch gekennzeichnet**, daß als Meßwerte das Drehmoment und der Drehwinkel erfaßt werden.

6. Verfahren nach einem der vorhergehenden Ansprüche, **dadurch gekennzeichnet**, daß die Änderung des Drehmomentes über die Änderung des Drehwinkels und damit eine Steifigkeit erfaßt wird.

7. Verfahren nach einem der vorhergehenden Ansprüche, **dadurch gekennzeichnet**, daß die Änderung des Drehwinkels über die Änderung der Zeit und damit eine Drehzahl erfaßt wird.

8. Verfahren nach einem der vorhergehenden Ansprüche, **dadurch gekennzeichnet**, daß die Steifigkeit und die Drehzahl nach Art der Fuzzy-Logik als Eingangsgrößen miteinander verknüpft werden.

9. Verfahren nach Anspruch 6 oder 8, **dadurch gekennzeichnet**, daß die Fälle "Steifigkeit niedrig", "Steifigkeit normal" und "Steifigkeit hoch" unterschieden werden.

10. Verfahren nach Anspruch 7 oder 8, **dadurch gekennzeichnet**, daß die Fälle "Drehzahl niedrig", "Drehzahl normal" und "Drehzahl hoch" unterschieden werden.

11. Verfahren nach einem der Ansprüche 8-10, **dadurch gekennzeichnet**, daß aus den momentanen Werten der Steifigkeit und der Drehzahl die Stellgröße beeinflussende Reglerfaktoren als Ausgangsgröße der Fuzzy-Logik bestimmt und miteinander verknüpft werden.

## Claims

1. Method of producing a joint, in particular a screw connection, by means of a controllable joining device, at least two current measured values representing the progress of the joining being determined during the joining, characterized in that the measured values are evaluated in the manner of fuzzy logic and, from this, an actuating variable for the joining device is determined.

2. Method according to Claim 1, characterized in that the measured values are determined during the entire joining process until a desired value of at least one of the measured values is reached.

3. Method according to one of the preceding claims, characterized in that the measured values are determined until a provisional joining state is reached and at this time an actuating variable for the joining device is determined.

4. Method according to one of the preceding claims, characterized in that the measured values are registered cyclically.

5. Method according to one of the preceding claims, characterized in that the torque and the angle of rotation are registered as measured values.

6. Method according to one of the preceding claims, characterized in that the change in the torque over the change in the angle of rotation and hence a stiffness is registered.

7. Method according to one of the preceding claims, characterized in that the change in the angle of rotation over the change in time and hence a rotational speed is registered.

8. Method according to one of the preceding claims, characterized in that the stiffness and the rotational speed are logically combined with one another as input variables in the manner of fuzzy logic.

9. Method according to Claim 6 or 8, characterized in that a distinction is drawn between the cases "low stiffness", "normal stiffness" and "high stiffness".

10. Method according to Claim 7 or 8, characterized in that a distinction is drawn between the cases "low rotational speed", "normal rotational speed" and "high rotational speed".

11. Method according to one of Claims 8-10, characterized in that, from the instantaneous values of the stiffness and of the rotational speed, the controller factors influencing the actuating variable are determined as output variable of the fuzzy logic and are logically combined with one another.

## Revendications

1. Procédé de fabrication d'une liaison de jonction en particulier d'une liaison par vissage au moyen d'un dispositif de jonction réglable, procédé dans lequel pendant la jonction on détecte au moins deux valeurs actuelles de mesure représentant la progression de la jonction,
caractérisé en ce que
les valeurs de mesure sont exploitées à la manière du circuit logique de Fuzzy et en ce qu'on détermine à partir de là une grandeur de réglage pour le dispositif de jonction.

2. Procédé selon la revendication 1,
caractérisé en ce que
les valeurs de mesure sont détectées pendant tout le processus de jonction jusqu'à l'obtention d'une valeur de consigne d'au moins l'une des valeurs de mesure.

3. Procédé selon l'une des revendications précédentes,
caractérisé en ce que
les valeurs de mesure sont détectées jusqu'à l'obtention d'un état de jonction provisoire et en ce qu'à cet instant on détermine une grandeur de réglage pour le dispositif de jonction.

4. Procédé selon l'une des revendications précédentes,
caractérisé en ce que
les valeurs de mesure sont détectées cycliquement.

5. Procédé selon l'une des revendications précédentes,
caractérisé en ce que
comme valeur de mesure, on détecte le couple de rotation et l'angle de rotation.

6. Procédé selon l'une des revendications précédentes,
caractérisé en ce que
l'on détecte la variation du couple de rotation en fonction de la variation de l'angle de rotation et de cette façon une rigidité.

7. Procédé selon l'une des revendications précédentes,
caractérisé en ce que
l'on détecte la variation de l'angle de rotation en fonction de la variation du temps et de cette façon une vitesse de rotation.

8. Procédé selon l'une des revendications précédentes,
caractérisé en ce que
la rigidité et la vitesse de rotation sont combinées l'une avec l'autre à la manière du circuit logique de Fuzzy comme grandeurs d'entrée.

9. Procédé selon la revendication 6 ou 8,
caractérisé en ce que
l'on distingue les cas "rigidité basse", "rigidité normale" et "rigidité haute".

10. Procédé selon la revendication 7 ou 8,
caractérisé en ce que
l'on distingue les cas "vitesse de rotation basse", "vitesse de rotation normale" et "vitesse de rotation haute".

11. Procédé selon l'une des revendications précédentes 8 à 10,
caractérisé en ce qu'
à partir des valeurs momentanées de la rigidité et de la vitesse de rotation, on détermine des facteurs de réglage influençant la grandeur de réglage comme grandeur de sortie du circuit logique de Fuzzy et on les combine l'un avec l'autre.
